# EUROPÄISCHE PATENTSCHRIFT

(11) **EP 0 897 123 B1**
(45) Veröffentlichungstag und Bekanntmachung des Hinweises auf die Patenterteilung: **13.11.2002**
(21) Anmeldenummer: 98115115.2
(22) Anmeldetag: 11.08.1998
(51) Int. Cl.: G01V 8/22

(54) **Lichtschranke**
Light barrier
Barrière optique

(30) Priorität: 12.08.1997 DE 29714438 U
(43) Veröffentlichungstag der Anmeldung: 17.02.1999
(73) Patentinhaber: SICK AG, 79183 Waldkirch (DE)
(72) Erfinder: Blöhbaum, Frank, 79112 Freiburg (DE)
(74) Vertreter: Pellkofer, Dieter Dr.

(56) Entgegenhaltungen:
- DE-A- 1 441 426
- DE-A- 4 239 013
- DE-C- 663 931
- US-A- 4 847 488
- US-A- 5 180 910
- US-A- 5 519 784

## Beschreibung

Die vorliegende Erfindung betrifft eine Lichtschranke, insbesondere eine Reflexionslichtschranke, mit einer Sendeeinheit zur Aussendung eines Lichtsignals in Richtung einer Umlenkeinheit und mit einer Empfangseinheit zum Empfang von von der Umlenkeinheit umgelenkten Licht, wobei im Strahlengang zwischen der Sendeeinheit und der Empfangseinheit ein Überwachungsbereich ausgebildet ist.

Beim Betrieb derartiger Lichtschranken wird das von der Sendeeinheit ausgesandte Licht durch den Überwachungsbereich hindurch ausgesandt, um nach erfolgreichem Durchlaufen des Überwachungsbereichs von der Empfangseinheit empfangen zu werden. Je nach Ausbildung der Umlenkeinheit, beispielsweise als Reflektor oder als Spiegelelement, kann dabei die Empfangseinheit auf derselben Seite des Überwachungsbereichs angeordnet sein wie die Sendeeinheit, während beispielsweise die als Reflektor ausgebildete Umlenkeinheit auf der gegenüberliegende Seite des Überwachungsbereichs angeordnet ist. Bei einer Ausbildung der Umlenkeinheit als Spiegelelement kann der Überwachungsbereich sowohl zwischen Sendeeinheit und Spiegelelement als auch zwischen Spiegelelement und Empfangseinheit ausgebildet sein, wobei sich die Empfangseinheit wahlweise auf der gleichen Seite des Überwachungsbereichs wie die Sendeeinheit oder auf der gegenüberliegenden Seite des Überwachungsbereichs angeordnet sein kann.

Die Empfangseinheit stellt einen Lichtempfang fest, wenn im Überwachungsbereich kein Gegenstand vorhanden ist, der den Strahlengang von der Sendeeinheit über die Umlenkeinheit zu der Empfangseinheit unterbricht. Bei Vorhandensein eines Gegenstands wird der ausgesandte Lichtstrahl unterbrochen, was dazu führt, daß die Empfangseinheit keinen Lichtempfang feststellt. Dies führt zur Abgabe eines Gegenstands-Feststellungssignals, so daß Lichtschranken der eingangs genannten Art dazu geeignet sind, das Vorhandensein von Gegenständen in einem Überwachungsbereich zu erkennen.

Problematisch bei Lichtschranken dieser Art, insbesondere wenn sie im Sicherheitsbereich verwendet werden, ist es, daß beispielsweise durch Einbringen von spiegelnden Elementen in den Überwachungsbereich Manipulationen vorgenommen werden können, die bewirken, daß von der Sendeeinheit ausgesandtes Licht von dem spiegelnden Element zur Empfangseinheit reflektiert wird, ohne daß das ausgesandte Licht den Überwachungsbereich vollständig überstrichen hat. In diesem Fall kann seitens der Empfangseinheit nicht unterschieden werden, ob der ausgesandte Lichtstrahl über die Umlenkeinheit oder über einen im Überwachungsbereich vorhandenen reflektierenden Gegenstand zu der Ernpfangseinheit geleitet wurde. Im letzteren Fall würde die Abgabe eines Gegenstands-Feststellungssignals unterbleiben, obwohl im Überwachungsbereich ein Gegenstand vorhanden ist. Dies kann insbesondere bei der Verwendung in der Sicherheitstechnik nicht hingenommen werden.

Ein weiteres Problem tritt bei der Verwendung von Lichtschranken der eingangs genannten Art bei Lichtgitter-Anordnungen auf. Bei diesen Lichtgittern muß zusätzlich sichergestellt werden, daß eine gegenseitige Beeinflussung von benachbart angeordneten Sende- und Empfangseinheiten sicher vermieden wird. Beispielsweise kann aufgrund von optischem Übersprechen trotz Unterbrechung eines Lichtstrahl die zugehörige Empfangseinheit einen Lichtempfang feststellen, der auf einer Streureflexion eines Nachbarkanals basiert, so daß fehlerhaft die Abgabe eines Gegenstands-Feststellungssignals unterbleibt.

Aus der US-PS 4,847,488 ist eine Lichtschranke mit einer Sende- und einer Empfangseinheit bekannt, bei der die ausgesandten Lichtstrahlen unterschiedlich polarisiert werden. Mit der Empfangseinheit kann jeweils die Polarisation der empfangenen Lichtstrahlen überprüft werden, so dass Änderungen in der Polarisation aufgrund von Störungen oder Objekten innerhalb des Strahlengangs erkannt werden.

Aus der US-PS 5,518,784 ist eine weitere Lichtschranke mit einer Vielzahl von parallel ausgesandten Lichtstrahlen bekannt. In einem Einlernvorgang wird die Unterbrechungsreihenfolge der Lichtstrahlen für bestimmte Bewegungen von Objekten innerhalb des Überwachungsbereichs ermittelt und abgespeichert. Durch einen Vergleich dieser abgespeicherten Unterbrechungsreihenfolgen mit im Betrieb auftretenden Unterbrechungsreihenfolgen können bestimmte Objekte und Bewegungsmuster erkannt und klassifiziert werden.

Eine Aufgabe der Erfindung besteht darin, eine Lichtschranke der eingangs genannten Art so auszubilden, daß auch reflektierende Gegenstände im Überwachungsbereich erkannt werden können. Weiterhin soll eine gegenseitige Beeinflussung benachbarter Sende- und Empfangseinheiten durch optisches Übersprechen vermieden werden.

Diese Aufgabe wird ausgehend von einer Lichtschranke der eingangs genannten Art erfindungsgemäß dadurch gelöst, daß eine Kodiervorrichtung vorgesehen ist, durch die dem ausgesandten Licht eine vorgegebene Bildinformation aufprägbar ist, daß insbesondere benachbart zur Empfangseinheit im Strahlengang eine Dekodiervorrichtung angeordnet ist, die im wesentlichen die zu der dem ausgesandten Licht aufgeprägten Bildinformation korrespondierende Autokorrelationsfunktion realisiert, und daß die Dekodiervorrichtung als diffraktives optisches Element ausgebildet ist.

Erfindungsgemäß wird also dem ausgesandten Licht eine Bildinformation bzw. Bildfunktion aufgeprägt, die beispielsweise in einer vorgegebenen, geometrischen Intensitätsverteilung des Lichts, insbesondere in einer Ebene senkrecht zur optischen Achse der Sendeeinheit ihren Niederschlag findet. Durch die als diffraktives Element ausgebildete Dekodiervorrichtung, die die Autokorrelationsfunktion zu der dem ausgesandten Licht aufgeprägten Bildinformation realisiert, ist gewährleistet, daß Licht, das mit der vorgegebenen Bildinformation kodiert ist, einen maximalen Lichtempfang am Ort der Empfangseinheit ermöglicht, d. h. einen Korrelationspeak erzeugt, der einen maximalen Lichtdurchsatz durch das diffraktive optische Element zu der Empfangseinheit gewährleistet. Diese Eigenschaft wird im folgenden auch als Durchlässigkeit der Dekodiervorrichtung für das kodierte Licht bezeichnet.

Das den Korrelationspeak darstellende Hauptmaximum der Korrelationsfunktion kann beispielsweise ohne aufwendige Justierung über eine komplexe Empfangseinheit, beispielsweise einen CCD-Sensor erkannt und ausgewertet werden. Bei Verwendung einer punktförmigen Empfangseinheit, beispielsweise einer einzelnen Empfangsdiode, ist demgegenüber eine Justierung derart erforderlich, daß das Hauptmaximum bei korrespondierender Bildfunktion auf die Empfangsdiode trifft.

Unkodiertes Licht bzw. Licht, das mit einer nicht zu der Korrelationsfunktion passenden Bildinformation versehen ist, erzeugt hingegen ein Ausgangssignal des diffraktiven optischen Elements, dessen Maxima relativ niedrig ausgebildet und verstreut angeordnet sind und somit auf der Empfangseinheit keinen bzw. einen so niedrigen Lichtempfang bewirken, daß von dieser ein Gegenstands-Feststellungssignal ausgelöst wird. Diese Eigenschaft wird im folgenden auch als Dämpfung des unkodierten bzw. des nicht passend kodierten Lichts bezeichnet.

Durch entsprechende Anordnung, beispielsweise am Ende des Überwachungsbereichs, einer zu der Dekodiervorrichtung korrespondierenden Kodiervorrichtung ist gewährleistet, daß das von der Sendeeinheit ausgesandte Licht vollständig den Überwachungsbereich durchlaufen muß, bevor es von der Kodiervorrichtung so optisch kodiert wird, daß es durch die Dekodiervorrichtung hindurch die Empfangseinheit erreichen kann. Wird das von der Sendeeinheit ausgesandte Licht innerhalb des Überwachungsbereichs über einen reflektierenden Gegenstand an der Kodiervorrichtung vorbei auf die Empfangseinheit gelenkt, so erzeugt die Dekodiervorrichtung aufgrund der fehlenden Kodierung keine ausreichende Lichtintensität auf der Empfangseinheit, so daß diese keinen oder nur einen ungenügenden Lichtempfang festgestellt und dementsprechend ein Gegenstands-Feststellungsignal abgibt. Unter Licht ist im Sinne der Erfindung dabei nicht nur sichtbares Licht zu verstehen, sondern jegliche elektromagnetische Strahlung, die bei einer Lichtschranke der eingangs genannten Art verwendbar ist, wie beispielsweise auch Infrarotstrahlung.

Die Ausbildung der Dekodiervorrichtung als diffraktives optisches Element hat den Vorteil, daß neben dem hohem Durchlässigkeitsgrad für einander zugeordnete Kodier- und Dekodierelemente gleichzeitig eine hohe Dämpfung von Hintergrundstrahlung gewährleistet ist. Weiterhin ist eine spektrale Selektivität gewährleistet, da Störquellen, deren Spektrum außerhalb der Wellenlänge der Sendeeinheit und damit außerhalb der Designwellenlänge des diffraktiven optischen Elements liegt, zusätzlich gedämpft werden.

Ein weiterer Vorteil liegt darin, daß eine praktisch unbegrenzte Zahl von unterschiedlichen Autokorrelationsfunktionen durch diffraktive optische Elemente realisierbar ist, wobei gleichzeitig die Kosten für die Herstellung dieser Elemente sehr gering sind, da die Elemente in Serienfertigung durch Heißprägen von Folien oder Spritzgießen günstig herstellbar sind.

Somit kann beim Einsatz von mehreren benachbarten Lichtschranken ein optisches Übersprechen zwischen den einzelnen durch die Lichtschranken gebildeten Übertragungskanälen durch die Verwendung unterschiedlicher Bildinformationen und dementsprechender diffraktiver optischer Elemente mit unterschiedlichen Autokorrelationsfunktionen verhindert werden.

Bei einer vorteilhaften Ausführungsform der Erfindung sind der die Bildinformation tragende Lichtstrahl und das diffraktive optische Element so zueinander ausgerichtet, daß das diffraktive optische Element für den die Bildinformation tragenden Lichtstrahl im wesentlichen seine maximale Durchlässigkeit besitzt. Insbesondere ist dabei der die Bildinformation tragende Lichtstrahl fluchtend mit der optischen Achse des diffraktiven optischen Elements ausgerichtet. Durch diese Ausbildung ist gewährleistet, daß die Verluste durch Dämpfung möglichst gering gehalten werden und der durch das diffraktive optische Element erzeugte Korrelationspeak möglichst vollständig auf die Empfangseinheit auftrifft, so daß ein möglichst hoher Wirkungsgrad einer erfindungsgemäß ausgebildeten Lichtschranke erreicht wird. Somit können erfindungsgemäß ausgebildete Lichtschranken Bereiche von einigen Metern überbrücken und auch bei ungünstigen Sichtverhältnissen, die beispielsweise durch Staub oder Nebel bedingt sind, eingesetzt werden.

Weiterhin wird durch diese Ausbildung erreicht, daß ausschließlich durch die zu der Dekodiervorrichtung korrespondierende Kodiervorrichtung kodiertes Licht zu einem Lichtempfang an der Empfangseinheit führt, wohingegen beispielsweise unkodiertes Licht bzw. durch eine weitere Kodiervorrichtung kodiertes Licht durch die Dekodiervorrichtung so stark gedämpft werden, daß der Lichtempfang in der Empfangseinheit einen vorgegebenen Schwellenwert unterschreitet, so daß ein Gegenstands-Feststellungssignal abgegeben wird.

Bevorzugt ist die Kodiervorrichtung als im Strahlengang angeordnetes, holographisches oder diffraktives optisches Element ausgebildet. Die Ausbildung als diffraktives optisches Element hat zum einen den Vorteil, daß eine Vielzahl von unterschiedlichen Bildinformationen, d.h. Kodierungsfunktionen durch diffraktive optische Elemente realisierbar sind, wobei gleichzeitig die Kosten für die Herstellung dieser Elemente sehr gering sind, da die Elemente in Serienfertigung durch Heißprägen von Folien oder Spritzgießen günstig herstellbar sind. Zum anderen besitzen diffraktive optische Elemente einen relativ hohen Durchlässigkeitsgrad, wobei gleichzeitig eine hohe Dämpfung von Hintergrundstrahlung gewährleistet ist. Weiterhin ist eine spektrale Selektivität gewährleistet, da Störquellen, deren Spektrum außerhalb der Wellenlänge der Sendeeinheit und damit außerhalb der Designwellenlänge des diffraktiven optischen Elements liegt, zusätzlich gedämpft werden.

Nach einer weiteren bevorzugten Ausführungsform der Erfindung ist die Kodiervorrichtung zur Aufprägung der vorgegebenen Bildinformation als im Strahlengang angeordnete Blende, insbesondere als optische Schattenmaske, beispielsweise als Loch- oder Streifenmaske ausgebildet. Solche Blenden bzw. Masken sind zum einen sehr kostengünstig herstellbar und zum anderen kann damit auf sehr einfache Weise eine Vielzahl von unterschiedlichen Bildinformationen hergestellt und dem ausgesandten Lichtstrahl aufgeprägt werden.

Grundsätzlich kann die Bildinformation auch direkt beim Ausstrahlen des Lichtsignals bereits diesem aufgeprägt sein, indem beispielsweise die Sendeeinheit ein Laserlicht abstrahlendes Sendeelement sowie eine die Kodiervorrichtung bildende Ansteuervorrichtung umfaßt, mit der das Sendeelement zum Aussenden von Licht mit der aufgeprägten, vorgegebenen Bildinformation ansteuerbar ist. Auf diese Weise trägt somit bereits der von dem Sendeelement ausgesandte Lichtstrahl die Bildinformation in sich, so daß im Strahlengang keine separate Kodiervorrichtung erforderlich ist.

Nach einer weiteren vorteilhaften Ausführungsform der Erfindung ist im Strahlengang zwischen dem diffraktiven optischen Element und der Umlenkvorrichtung eine Abbildungsvorrichtung, insbesondere eine Linse, zur Abbildung des von dem diffraktiven optischen Element erzeugten Ausgangssignals auf die Empfangseinheit angeordnet. Durch die Abbildungsvorrichtung ist gewährleistet, daß das von dem diffraktiven optischen Element gelieferte Ausgangssignal, das bei Auftreffen des zugeordneten, kodierten Lichts einen Korrelationspeak darstellt, auf die Empfangseinheit fokussiert wird, so daß von der Empfangseinheit ein maximaler Lichtempfang festgestellt wird.

Bevorzugt ist im Strahlengang vor dem diffraktiven optischen Element eine Abbildungsvorrichtung, insbesondere eine Linse, vorgesehen, durch die die dem Licht aufgeprägte Bildinformation auf das diffraktive optische Element abgebildet wird. Durch diese Abbildungsvorrichtung ist gewährleistet, daß das die Bildinformation tragende Licht nicht in den Überwachungsbereich hinein divergiert, sondern zumindest im wesentlichen mit der vollständigen Bildinformation auf das diffraktive optische Element auftrifft, so daß eine maximale Korrelation zwischen der auf dem diffraktiven optischen Element auftreffenden Bildinformation und der durch das diffraktive optische Element realisierten Autokorrelationsfunktion und damit eine maximale Durchlässigkeit des diffraktiven optischen Elements erreicht wird.

Nach einer weiteren bevorzugten Ausführungsform der Erfindung ist die Umlenkeinheit als Reflektor ausgebildet. Auf diese Weise kann die erfindungsgemäße Lichtschranke als Autokollimationssystem ausgebildet sein, wobei der Reflektor an der zu der Sende- und Empfangseinheit gegenüberliegenden Seite des Überwachungsbereichs ausgebildet ist. Die Umlenkeinheit kann aber beispielsweise auch als Spiegelelement ausgebildet sein, so daß die Empfangseinheit bei Verwendung von einem oder mehreren Spiegelelementen sowohl auf der gleichen Seite des Überwachungsbereichs wie die Sendeeinheit als auch auf der gegenüberliegenden Seite des Überwachungsbereich angeordnet sein kann. Der Überwachungsbereich kann dabei zwischen der Sendeeinheit und der Umlenkeinheit, der Umlenkeinheit und der Empfangseinheit oder zwischen zwei Umlenkeinheiten vorgesehen sein bzw. aus einer Kombination dieser Strecken bestehen.

Bevorzugt ist die Kodiervorrichtung am Ende des Überwachungsbereichs angeordnet, da auf diese Weise gewährleistet ist, daß der gesamte Überwachungsbereich durch die Kodiervorrichtung geschützt ist.

Nach einer weiteren vorteilhaften Ausführungsform der Erfindung ist eine Steuereinheit vorgesehen, mit der die durch das diffraktive optische Element realisierte Autokorrelationsfunktion einstellbar ist. Dabei ist bevorzugt das diffraktive optische Element als Flüssigkristallanordnung ausgebildet, wobei durch die Steuereinheit unterschiedliche Steuerungssignale, insbesondere unterschiedliche Spannungswerte, an die Flüssigkristallanordnung anlegbar sind und die Autokorrelationsfunktion abhängig von der an der Flüssigkristallanordnung anliegenden Spannung einstellbar ist. Durch die Möglichkeit, die Autokorrelationsfunktion variabel einstellen zu können, kann die erfindungsgemäße Lichtschranke noch flexibler eingesetzt werden. Insbesondere können somit für beliebig vorgegebene Bildfunktionen die zugehörigen Autokorrelationsfunktionen durch diffraktive optische Elemente desselben Typs realisiert werden, so daß keine unterschiedlichen diffraktiven optischen Elemente hergestellt und auf Lager gehalten werden müssen.

Nach einer weiteren vorteilhaften Ausführungsform der Erfindung sind zumindest zwei, insbesondere nebeneinanderliegend angeordnete Sendeeinheiten jeweils mit einer Kodiervorrichtung sowie zumindest zwei zu den Sendeeinheiten korrespondierende Empfangseinheiten, insbesondere zu jeder Sendeeinheit eine korrespondierende Empfangseinheit, vorgesehen, wobei jeweils im Strahlengang zwischen einer Sendeeinheit und der damit korrespondierenden Empfangseinheit ein für das von der Sendeeinheit ausgesandte, kodierte Licht im wesentlichen maximal durchlässiges, diffraktives optisches Element angeordnet ist und sich die Autokorrelationsfunktionen zumindest zweier benachbarter, diffraktiver optischer Elemente so unterscheiden, daß die Durchlässigkeit der diffraktiven optischen Elemente jeweils für das kodierte Licht des Nachbarkanals wesentlich geringer ist als für das dem jeweiligen diffraktiven optischen Element zugeordnete, kodierte Licht, insbesondere die diffraktiven optischen Elemente jeweils im wesentlichen undurchlässig für das kodierte Licht des Nachbarkanals sind.

Durch diese Ausbildung ist gewährleistet, daß ein optisches Übersprechen zwischen Nachbarkanälen ausgeschlossen ist. Je nach Bedarf sind dabei nicht nur die Kodier- und Dekodiervorrichtungen unmittelbar benachbarter Empfangskanäle, sondern auch weiterer benachbarter Empfangskanäle so ausgebildet, daß die Dekodiervorrichtungen jeweils für Licht, das mit einer der anderen Kodiervorrichtungen kodiert wurde, im wesentlichen undurchlässig sind. Eine solche Ausführung ist insbesondere bei der Verwendung von erfindungsgemäß ausgebildeten Lichtschranken bei einer Lichtgitter-Anordnung vorteilhaft.

Wie bereits eingangs erwähnt, wird dabei ein diffraktives optischen Element als für kodiertes Licht maximal durchlässig bezeichnet, wenn das den Korrelationspeak bildende Hauptmaximum der durch das diffraktive optische Element gebildeten Autokorrelationsfunktion im wesentlichen vollständig auf der dem diffraktiven optischen Element zugeordneten Empfangseinheit auftrifft. Dementsprechend wird ein diffraktives optisches Element als undurchlässig oder schlecht durchlässig bezeichnet, wenn die Intensitätsmaxima des Ausgangssignals des diffraktiven optischen Elements relativ niedrig bzw. so verteilt sind, daß sie nicht bzw. nur zu einem geringen Teil auf der Empfangseinheit auftreffen und somit keinen ausreichenden Lichtempfang auf der Empfangseinheit bewirken.

Weitere vorteilhafte Ausführungsformen sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: ein Lichtgitter bestehend aus drei erfindungsgemäß ausgebildeten Reflexionslichtschranken, mit einem in den Überwachungsbereich eingebrachten, reflektierenden Gegenstand,
- Fig. 2: das Lichtgitter nach Fig. 1 ohne einen im Überwachungsbereich angeordneten Gegenstand und
- Fig. 3: eine erfindungsgemäß ausgebildete Lichtschranke mit zwei als Spiegelelemente ausgebildeten Umlenkeinheiten.

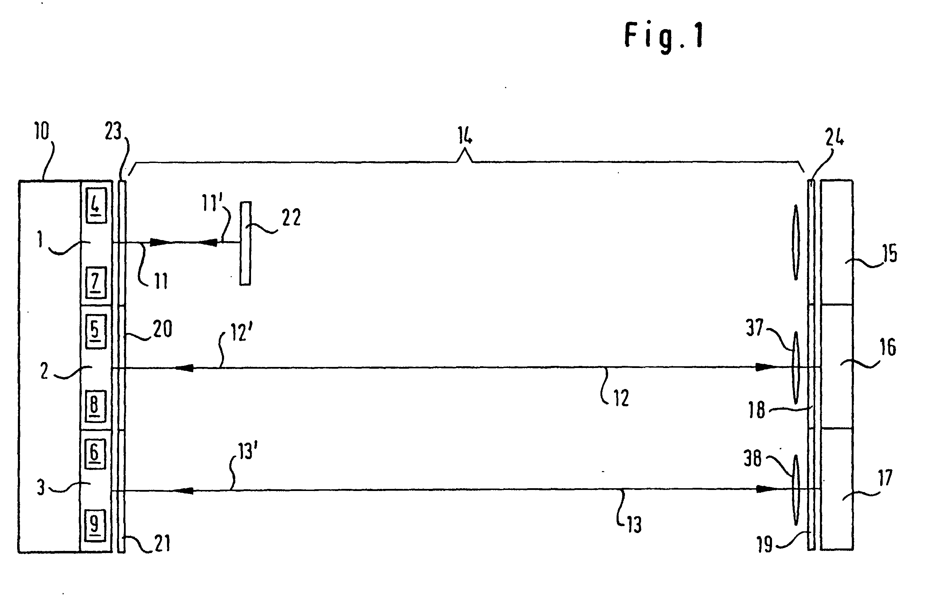

In Fig. 1 sind drei Autokollimationssysteme 1, 2, 3, die jeweils eine Sendeeinheit 4, 5, 6 sowie eine Empfangseinheit 7, 8, 9 umfassen, nebeneinanderliegend innerhalb eines gemeinsamen Gehäuses 10 angeordnet. Die Sendeeinheiten 4, 5, 6 bestehen beispielsweise aus einer LED oder einer Laserdiode mit Sendeoptik und elektronischer Ansteuerung, während die Empfangseinheiten 7, 8, 9 jeweils beispielsweise eine Photodiode mit Empfangsoptik und elektronischer Auswerteschaltung umfassen.

Jede der Sendeeinheiten 4, 5, 6 sendet jeweils einen Lichtstrahl 11, 12, 13 durch einen Überwachungsbereich 14 in Richtung einer der Sendeeinheit 4, 5, 6 gegenüberliegenden, den Überwachungsbereich 14 begrenzenden, als Reflektor 15, 16, 17 ausgebildeten Umlenkeinheit.

Die ausgesandten Lichtstrahlen 12, 13 durchlaufen jeweils im Strahlengang vor den Reflektoren 16, 17 angeordnete, beispielsweise als Schattenmasken ausgebildete Kodiervorrichtungen 18 bzw. 19, durch die den Lichtstrahlen 12, 13 eine optische Kodierung, d.h. eine bestimmte Bildinformation bzw. Bildfunktion in Form eines flächigen, geometrischen Lichtmusters aufgeprägt wird. Durch unterschiedliche Ausbildungen der Schattenmasken 18, 19 können praktisch unbegrenzt viele, unterschiedliche Muster erzeugt werden, wobei zumindest die benachbart angeordneten Schattenmasken 18, 19 so ausgebildet sind, daß die aufgeprägten Bildinformationen für die Lichtstrahlen 12, 13 unterschiedlich sind.

Die durch die Schattenmasken 18, 19 hindurchtretenden Lichtstrahlen 12, 13 werden an den Reflektoren 16, 17 in sich selbst reflektiert und über Linsen 37, 38 als reflektierte Lichtstrahlen 12', 13' so auf vor den die Empfangseinheiten 8, 9 enthaltenden Autokollimationssystemen 2, 3 angeordnete, Dekodiervorrichtungen bildende, diffraktive optische Elemente 20, 21 abgebildet, daß die den reflektierten Lichtstrahlen 12', 13' jeweils aufgeprägte Bildinformation auf die diffraktiven Elemente 20 bzw. 21 fokussiert wird.

Die Schattenmasken 18, 19 und die diffraktiven optischen Elemente 20, 21 sind jeweils so paarweise aufeinander abgestimmt, daß die mit den diffraktiven optischen Elementen 20 bzw. 21 realisierten optischen Autokorrelationsfunktionen jeweils ihr Maximum bei der mit den Schattenmasken 18 bzw. 19 den Lichtstrahlen 12 bzw. 13 aufgeprägten Bildinformationen erreichen.

Die diffraktiven optischen Elemente 20, 21 sind daher für die reflektierten, kodierten Lichtstrahlen 12', 13' maximal durchlässig, so daß die durch die diffraktiven optischen Elemente 20, 21 hindurchtretenden, reflektierten Lichtstrahlen 12', 13' einen sogenannten Korrelationspeak bilden, der jeweils über die Empfangsoptik auf die Empfangselemente der Empfangseinheiten 8, 9 abgebildet wird. Die Empfangseinheiten 8, 9 stellen somit einen Lichtempfang fest, so daß von diesen Empfangseinheiten kein Gegenstands-Feststellungssignal ausgelöst wird, da sich kein Gegenstand innerhalb des von den Lichtstrahlen 12 und 13 überstrichenen Teils des Überwachungsbereichs 14 befindet.

Demgegenüber ist in dem zwischen dem Autokollimationssystem 1 und dem Reflektor 15 angeordneten Teil des Überwachungsbereichs 14 ein reflektierender Gegenstand 22 angeordnet, durch den der von der Sendeeinheit 4 ausgesandte Lichtstrahl 11 unterbrochen und unmittelbar in sich zurück als reflektierter Lichtstrahl 11' in Richtung der Empfangseinheit 7 reflektiert wird. Der reflektierte Lichtstrahl 11' trifft auf ein im Strahlengang vor der Empfangseinheit 7 angeordnetes, als Dekodiervorrichtung ausgebildetes, diffraktives optisches Element 23 auf. Da das diffraktive optische Element 23 die Autokorrelationsfunktion zu einer vor dem Reflektor 15 angeordneten, eine Kodiervorrichtung bildenden Schattenmaske 24 realisiert, der Lichtstrahl 11 jedoch aufgrund der Unterbrechung durch den reflektierenden Gegenstand 22 nicht die Schattenmaske 24 durchläuft und somit nicht mit einer entsprechenden Kodierung versehen ist, wird der von dem reflektierenden Gegenstand 22 in Richtung der Empfangseinheit 7 reflektierte Lichtstrahl 11' durch das diffraktive optische Element 23 so stark gedämpft bzw. ein Ausgangssignal des diffraktiven optischen Elements mit so geringen bzw. verteilten Maxima erzeugt, daß das von der Empfangseinheit 7 empfangene Licht unter einem vorgegebenen Schwellenwert liegt und somit von der Empfangseinheit 7 ein Gegenstands-Feststellungssignal abgegeben wird.

Obwohl der von dem reflektierenden Gegenstand 22 reflektierte Lichtstrahl 11' eine hohe Strahlungsintensität besitzt, führt somit bei der erfindungsgemäß ausgebildeten Vorrichtung dieser Lichtstrahl nicht zum Freischalten des durch den Strahl 11 zu schützenden Teils des Überwachungsbereichs 14, wie es ohne diffraktives optisches Element 23 der Fall wäre.

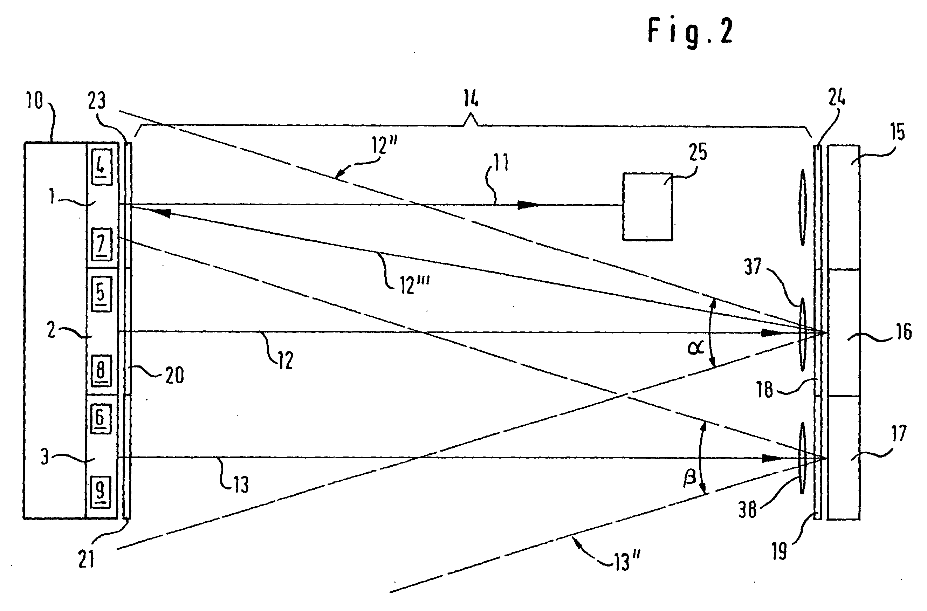

In Fig. 2 ist in den Strahlengang des von der Sendeeinheit 4 ausgesandten Lichtstrahls 11 ein nicht bzw. schlecht reflektierender Gegenstand 25 eingeführt. Durch den Gegenstand 25 wird der Lichtstrahl 11 unterbrochen, wobei dieser aufgrund der geringen Reflektivität des Gegenstands 25 nicht bzw. nur mit geringer Lichtintensität in Richtung der Empfangseinheit 7 zurück reflektiert wird.

Wie in Fig. 1 senden auch in Fig. 2 die Sendeeinheiten 5, 6 Lichtstrahlen 12, 13 durch den Überwachungsbereich 14 in Richtung der Reflektoren 16, 17. Gegenüber der Darstellung gemäß Fig. 1, gemäß der die ausgesandten Lichtstrahlen 12, 13 ideal ungestreut in sich selbst zurück reflektiert werden, werden gemäß der Darstellung in Fig. 2 die Lichtstrahlen 12, 13 durch die Reflektoren 16, 17 mit den Raumwinkeln α, β zu divergierenden Lichtbündel 12", 13" aufgestreut, wie es in der Praxis aufgrund unvollkommener Reflexionseigenschaften der Reflektoren 16, 17, die auch durch die Linsen 37, 38 nicht vollständig kompensiert werden können, der Fall ist.

Ein Teil 12"' des reflektierten, divergierenden Lichtbündels 12" trifft auf das diffraktive optische Element 23, das im Strahlengang vor der Empfangseinheit 7 angeordnet ist. Da der Lichtstrahl 12 vor der Reflexion am Reflektor 16 die Schattenmaske 18 durchläuft, ist dem reflektierten Lichtbündel 12" und damit auch dem Teil 12''' des Lichtbündels 12"' die durch die Schattenmaske 18 vorgegebene Bildinformation aufgeprägt.

Diese Bildinformation korreliert jedoch mit der durch das diffraktive optische Element 23 realisierten Dekodierfunktion nur sehr gering, so daß das diffraktive optische Element 23 für den Teil 12"' des reflektierten Lichtbündels 12" eine hohe Dämpfung besitzt. Somit gelangt im wesentlichen kein Licht zu der Empfangseinheit 7, so daß trotz des von dem Reflektor 16 in Richtung der Empfangseinheit 7 abgestrahlten Lichtanteils 12"' das Unterbrechen des Lichtstrahls 11 durch den Gegenstand 25 erkannt und ein Gegenstands-Feststellungssignal abgegeben wird.

Ohne erfindungsgemäße Kodierung würde das an dem Reflektor 16 reflektierte Streulicht 12''' zu einem Lichtempfang an der Empfangseinheit 7 führen, so daß fälschlicherweise kein Gegenstands-Feststellungssignal abgegeben werden würde. Durch die erfindungsgemäß ausgebildete Vorrichtung wird somit eine Fehlschaltung aufgrund eines optischen Übersprechens von Nachbarkanälen verhindert.

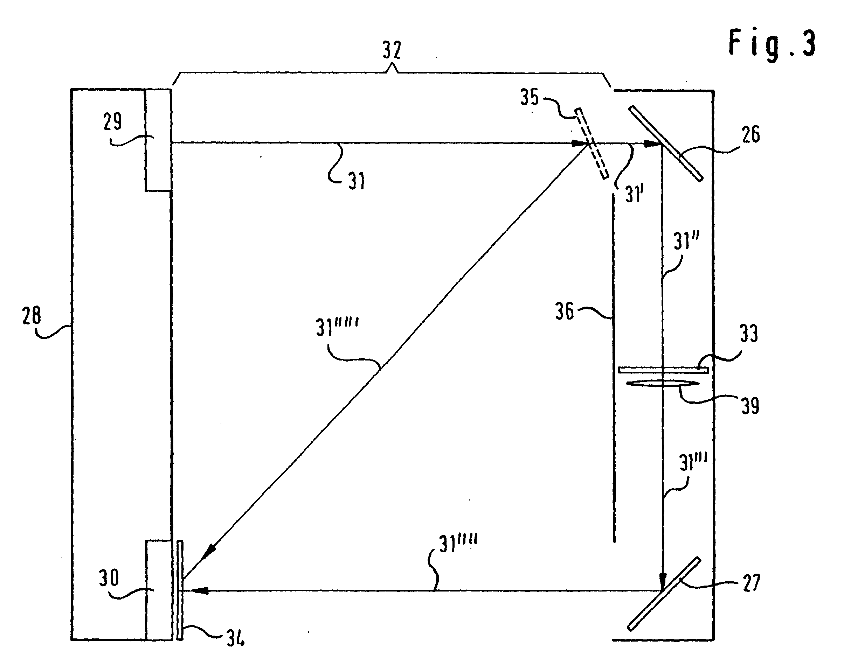

Bei der Anordnung gemäß Fig. 3 sind anstelle der in den Figuren 1 und 2 dargestellten Reflektoren Spiegelelemente 26, 27 vorgesehen. Innerhalb eines Gehäuses 28 sind räumlich voneinander getrennt je eine Sendeeinheit 29 mit Sendeoptik und eine Empfangseinheit 30 mit Empfangsoptik angeordnet. Die Sendeeinheit 29 sendet einen Lichtstrahl 31 in Richtung des ersten Spiegelelements 26 aus, wobei zwischen der Sendeeinheit 29 und dem Spiegelelement 26 ein Überwachungsbereich 32 gebildet ist.

Befindet sich kein Gegenstand im Strahlengang des Lichtstrahls 31, so tritt dieser als Lichtstrahl 31' auf das Spiegelelement 26 auf, von dem er in Richtung des zweiten Spiegelelements 27 als reflektierter Lichtstrahl 31" reflektiert wird.

Der reflektierte Lichtstrahl 31" tritt durch eine zwischen den Spiegelelementen 26, 27 angeordnete Schattenmaske 33 hindurch, durch die dem Lichtstrahl 31" eine optische Kodierung in Form einer bestimmten Bildinformation aufgeprägt wird. Der mit der Kodierung versehene Lichtstrahl 31"' trifft über eine Linse 39 auf das zweite Spiegelelement 27 und wird von diesem als reflektierter Lichtstrahl 31"" in Richtung der Empfangseinheit 30 reflektiert.

Im Strahlengang vor der Empfangseinheit 30 ist ein eine Dekodiervorrichtung bildendes, diffraktives optisches Element 34 angeordnet, das eine Autokorrelationsfunktion für die durch die Schattenmaske 33 dem Lichtstrahl 31"' bzw. 31"" aufgeprägte Kodierfunktion realisiert. Dabei sind die Schattenmaske 33 und das diffraktive optische Element 34 so aufeinander abgestimmt, daß die mit diffraktiven optischen Element 34 realisierte, optische Autokorrelationsfunktion ihr Maximum bei der mit der Schattenmaske 33 dem Lichtstrahl 31"' bzw. 31"" aufgeprägten Bildfunktion besitzt. Eine scharfe Abbildung der Bildinformation auf das diffraktive optische Element 34 wird dabei durch die Linse 39 gewährleistet.

Das diffraktive optische Element 34 ist somit für den kodierten Lichtstrahl 31"" maximal durchlässig bzw. erzeugt als Ausgangssignal einen über die Empfangsoptik auf die Empfangseinheit 30 treffenden Korrelationspeak, so daß die Empfangseinheit 30 einen Lichtempfang feststellt und kein Gegenstands-Feststellungssignal abgibt.

Wird in den Überwachungsbereich 32 ein reflektierender Gegenstand 35 eingeführt, wie er gestrichelt in Fig. 3 dargestellt ist, so wird der von der Sendeeinheit 29 ausgesandte Lichtstrahl 31 als reflektierter Lichtstrahl 31''''' in Richtung der Empfangseinheit 30 umgelenkt. Da dem reflektierten Lichtstrahl 31""' keine Bildinformation durch die Schattenmaske 33 aufgeprägt ist, weist das vor der Empfangseinheit 30 angeordnete, diffraktive optische Element 34 eine hohe Dämpfung für den reflektierten Lichtstrahl 31''''' auf, so daß kein bzw. nur ein relativ geringer Anteil an Licht auf die Empfangseinheit 30 auftrifft. Aufgrund des fehlenden Lichtempfangs wird daher von der Empfangseinheit 30 ein Gegenstands-Feststellungssignal abgegeben.

Auch beispielsweise an einer Gehäusewand 36, innerhalb der die Spiegelelemente 26, 27 sowie die Schattenmaske 33 angeordnet sind, reflektierte Anteile des ausgestrahlten Lichtstrahls 31, die in Richtung des Empfangselements 30 treffen, besitzen keine durch die Schattenmaske 33 erzeugte Bildinformation, so daß diese Anteile das diffraktive optische Element 34 nicht durchdringen bzw. kein ausreichend großes Ausgangssignal erzeugen, so daß keine bzw. nur eine relativ geringe Menge von Licht auf die Empfangseinheit 30 auftrifft. Somit wird auch in diesen Fällen von der Empfangseinheit 30 bei Unterbrechen des Lichtstrahls 31 ein Gegenstands-Feststellungssignal erzeugt.

## Patentansprüche

1. Lichtschranke, insbesondere Reflexionslichtschranke, mit einer Sendeeinheit (4, 5, 6, 29) zur Aussendung eines Lichtsignals (11, 12, 13, 31) in Richtung einer Umlenkeinheit (15, 16, 17, 26, 27) und mit einer Empfangseinheit (7, 8, 9, 30) zum Empfang von von der Umlenkeinheit (15, 16, 17, 26, 27) umgelenkten Licht (12', 12", 13', 31""), wobei im Strahlengang zwischen der Sendeeinheit (4, 5, 6, 29) und der Empfangseinheit (7, 8, 9, 30) ein Überwachungsbereich (14, 32) ausgebildet ist,
**dadurch gekennzeichnet,**
**daß** eine Kodiervorrichtung (18, 19, 24, 33) vorgesehen ist, durch die dem ausgesandten Licht (11, 12, 13, 31) eine vorgegebene Bildinformation aufprägbar ist,
**daß** insbesondere benachbart zur Empfangseinheit (7, 8, 9, 30) im Strahlengang eine Dekodiervorrichtung angeordnet ist, die im wesentlichen die zu der dem ausgesandten Licht (11, 12, 13, 31) aufgeprägten Bildinformation korrespondierende Autokorrelationsfunktion realisiert, und
**daß** die Dekodiervorrichtung als diffraktives optisches Element (20, 21, 23, 34) ausgebildet ist.

2. Lichtschranke nach Anspruch 1,
**dadurch gekennzeichnet,**
**daß** der die Bildinformation tragende Lichtstrahl (12', 13', 31'''') und das diffraktive optische Element (20, 21, 23, 34) so zueinander ausgerichtet sind, daß das diffraktive optische Element (20, 21, 23, 34) für den die Bildinformation tragenden Lichtstrahl (12', 13', 31"") im wesentlichen seine maximale Durchlässigkeit besitzt, d. h. der von dem diffraktiven optischen Element (20, 21, 23, 34) erzeugte Korrelationspeak im wesentlichen vollständig auf die Empfangseinheit (7, 8, 9, 30) abgebildet wird, insbesondere daß der die Bildinformation tragende Lichtstrahl (12', 13', 31"") im wesentlichen fluchtend mit der optischen Achse des diffraktiven optischen Elements (20, 21, 23, 34) ausgerichtet ist.

3. Lichtschranke nach Anspruch 1 oder 2,
**dadurch gekennzeichnet,**
**daß** die Kodiervorrichtung (18, 19, 24, 33) als im Strahlengang angeordnetes, holographisches oder diffraktives optisches Element ausgebildet ist, und/oder daß die Kodiervorrichtung (18, 19, 24, 33) als im Strahlengang angeordnete Blende, insbesondere als optische Schattenmaske, beispielsweise als Loch- oder Streifenmaske ausgebildet ist.

4. Lichtschranke nach einem der vorhergehenden Ansprüche,
**dadurch gekennzeichnet,**
**daß** die Sendeeinheit ein Laserlicht abstrahlendes Sendeelement sowie eine die Kodiervorrichtung bildende Ansteuervorrichtung umfaßt, mit der das Sendeelement zum Aussenden von Licht mit der aufgeprägten, vorgegebenen Bildinformation ansteuerbar ist.

5. Lichtschranke nach einem der vorhergehenden Ansprüche,
**dadurch gekennzeichnet,**
**daß** im Strahlengang zwischen dem diffraktiven optischen Element und der Umlenkeinheit eine Abbildungsvorrichtung, insbesondere eine Linse, zur insbesondere fokussierten Abbildung des von dem diffraktiven optischen Element erzeugten Ausgangssignals auf die Empfangseinheit angeordnet ist, und/oder daß im Strahlengang vor dem die Dekodiervorrichtung bildenden diffraktiven optischen Element (20, 21, 23, 34) eine Abbildungsvorrichtung, insbesondere eine Linse (37, 38, 39), vorgesehen ist, durch die die dem Licht aufgeprägte Bildinformation auf das diffraktive optische Element (20, 21, 23, 34) insbesondere fokussiert abgebildet wird.

6. Lichtschranke nach einem der vorhergehenden Ansprüche,
**dadurch gekennzeichnet,**
**daß** die Umlenkeinheit als Reflektor (15, 16, 17) ausgebildet ist, und/oder daß die Umlenkeinheit als Spiegelelement (26, 27) ausgebildet ist.

7. Lichtschranke nach einem der vorhergehenden Ansprüche,
**dadurch gekennzeichnet,**
**daß** im Strahlengang mehrere Umlenkeinheiten (26, 27) vorgesehen sind, und/oder daß die Kodiervorrichtung (18, 19, 24) am Ende des Überwachungsbereichs (14) angeordnet ist.

8. Lichtschranke nach einem der vorhergehenden Ansprüche,
**dadurch gekennzeichnet,**
**daß** die Kodiervorrichtung (18, 19, 24) benachbart zur Umlenkeinheit (15, 16, 17) auf deren dem Überwachungsbereich (14) zugewandten Seite angeordnet ist, und/oder daß die Sende- (4, 5, 6) und die Empfangseinheit (7, 8, 9) als Autokollimationssystem ausgebildet sind.

9. Lichtschranke nach einem der vorhergehenden Ansprüche,
**dadurch gekennzeichnet,**
**daß** die Umlenkeinheit (15, 16, 17) gegenüber der Sende- (4, 5, 6) und der Empfangseinheit (7, 8, 9) am Ende des Überwachungsbereichs (14) angeordnet ist, und/oder daß das diffraktive optische Element (20, 21, 23, 34) im wesentlichen innerhalb der Fourierebene angeordnet ist.

10. Lichtschranke nach einem der vorhergehenden Ansprüche,
**dadurch gekennzeichnet,**
**daß** eine Steuereinheit vorgesehen ist, mit der die durch das diffraktive optische Element realisierte Autokorrelationsfunktion einstellbar ist, insbesondere daß das diffraktive optische Element als Flüssigkristallanordnung ausgebildet ist, daß durch die Steuereinheit unterschiedliche Steuerungssignale, insbesondere unterschiedliche Spannungswerte, an die Flüssigkristallanordnung anlegbar sind und daß die Autokorrelationsfunktion abhängig von der an der Flüssigkristallanordnung anliegenden Spannung einstellbar ist.

11. Lichtschranke nach einem der vorhergehenden Ansprüche,
**dadurch gekennzeichnet,**
**daß** zumindest zwei, insbesondere nebeneinanderliegend angeordnete Sendeeinheiten (4, 5, 6) jeweils mit einer Kodiervorrichtung (18, 19, 24) vorgesehen sind,
**daß** zumindest zwei zu den Sendeeinheiten (4, 5, 6) korrespondierende Empfangseinheiten (7, 8, 9) vorgesehen sind, insbesondere zu jeder Sendeeinheit (4, 5, 6) eine korrespondierende Empfangseinheit (7, 8, 9) vorgesehen ist,
**daß** jeweils im Strahlengang zwischen einer Sendeeinheit (4, 5, 6) und der damit korrespondierenden Empfangseinheit (7, 8, 9) ein für das von der Sendeeinheit (4, 5, 6) ausgesandte, kodierte Licht (12', 13') im wesentlichen maximal durchlässiges, diffraktives optisches Element (20, 21) vorgesehen ist und
**daß** sich die Autokorrelationsfunktionen zumindest zweier benachbarter, diffraktiver optischer Elemente (20, 21) so unterscheiden, daß die Durchlässigkeit der diffraktiven optischen Elemente (20, 21) jeweils für das kodierte Licht (13', 12') des Nachbarkanals wesentlich geringer ist als für das dem jeweiligen diffraktiven optischen Element (20, 21) zugeordnete, kodierte Licht (12', 13'), insbesondere daß die diffraktiven optischen Elemente (20, 21) jeweils im wesentlichen undurchlässig für das kodierte Licht (13', 12') des Nachbarkanals sind.

12. Lichtschranke nach einem der vorhergehenden Ansprüche,
**dadurch gekennzeichnet,**
**daß** die Kodiervorrichtung und die Umlenkeinheit, insbesondere der Reflektor, einstückig ausgebildet sind, und/oder daß eine Auswerteschaltung vorgesehen ist, die eine Gegenstands-Feststellungssignal abgibt, wenn die Menge des empfangenen Lichtes zumindest an einer Empfangseinheit einen bestimmten Schwellenwert unterschreitet.

13. Lichtgitter bestehend aus einer Vielzahl von Lichtschranken nach einem der vorhergehenden Ansprüche.

## Claims

1. A light barrier, in particular a reflection light barrier, comprising a transmitter unit (4, 5, 6, 29) for the transmission of a light signal (11, 12, 13, 31) in the direction of a deflection unit (15, 16, 17, 26, 27) and comprising a receiver unit (7, 8, 9, 30) for the reception of light (12', 12", 13', 31"") deflected by the deflection unit (15, 16, 17, 26, 27), with a monitored zone (14, 32) being formed in the beam path between the transmitter unit (4, 5, 6, 29) and the receiver unit (7, 8, 9, 30),
**characterised in that**
an encoding apparatus (18, 19, 24, 33) is provided by which a predetermined piece of image information can be impressed onto the transmitted light (11, 12, 13, 31);
**in that** a decoding apparatus is arranged in the beam path, in particular adjacent to the receiver unit (7, 8, 9, 30), which substantially realises the auto-correlation function corresponding to the image information impressed onto the transmitted light (11, 12, 13, 31); and
**in that** the decoding apparatus is formed as a diffractive optical element (20, 21, 23, 34).

2. A light barrier in accordance with claim 1, **characterised in that** the light ray (12', 13', 31"") carrying the image information and the diffractive optical element (20, 21, 23, 34) are aligned with respect to one another such that the diffractive optical element (20, 21, 32, 34) substantially has its maximum transmissibility for the light ray (12', 13', 31"") carrying the image information, i.e. the correlation peak generated by the diffractive optical element (20, 21, 23, 34) is substantially fully imaged onto the receiver unit (7, 8, 9, 30), in particular such that the light ray (12', 13', 31"") carrying the image information is aligned to substantially coincide with the optical axis of the diffractive optical element (20, 21, 23, 34).

3. A light barrier in accordance with claim 1 or claim 2, **characterised in that** the encoding apparatus (18, 19, 24, 33) is made as a holographic or diffractive optical element arranged in the beam path; and/or **in that** the encoding apparatus (18, 19, 24, 33) is made as a diaphragm, in particular as an optical planar mask, for example as a shadow mask or as a strip mask, arranged in the beam path.

4. A light barrier in accordance with any one of the preceding claims, **characterized in that** the transmitter unit comprises a transmitting element transmitting laser light and a control apparatus forming the encoding device with which the transmitting element can be controlled for the transmission of light having the impressed, predetermined image information.

5. A light barrier in accordance with any one of the preceding claims, **characterized in that** an imaging apparatus, in particular a lens, is arranged in the beam path between the diffractive optical element and the deflection unit for the imaging, in particular the focused imaging, of the output signal generated by the diffractive optical element onto the receiver unit; and/or **in that** an imaging device, in particular a lens (37, 38, 39), is provided in the beam path in front of the diffractive optical element (20, 21, 23, 24) forming the decoding apparatus, the image information impressed onto the light being imaged, in particular imaged in a focused manner, onto the diffractive optical element (20, 21, 23, 34) by said imaging device.

6. A light barrier in accordance with any one of the preceding claims, **characterized in that** the deflection unit is made as a reflector (15, 16, 17); and/or **in that** the deflector unit is made as a mirror element (26, 27).

7. A light barrier in accordance with any one of the preceding claims, **characterized in that** a plurality of deflection units (26, 27) are provided in the beam path; and/or **in that** the encoding apparatus (18, 19, 24) is arranged at the end of the monitored zone (14).

8. A light barrier in accordance with any one of the preceding claims, **characterized in that** the encoding apparatus (18, 19, 24) is arranged spaced apart from the deflection unit (15, 16, 17) - on its side remote from the monitored zone (14); and/or **in that** the transmitter unit (4, 5, 6) and the receiver unit (7, 8, 9) are made as an auto-collimation system.

9. A light barrier in accordance with any one of the preceding claims, **characterized in that** the deflector unit (15, 16, 17) is arranged opposite the transmitter unit (4, 5, 6) and the receiver unit (7, 8, 9) at the end of the monitored zone (14); and/or **in that** the diffractive optical element (20, 21, 23, 34) is substantially arranged within the Fourier plane.

10. A light barrier in accordance with any one of the preceding claims, **characterized in that** a control unit is provided with which the auto-correlation function realized by the diffractive optical element can be set; in particular **in that** the diffractive optical element is made as a liquid crystal assembly; **in that** different control signals, in particular different voltage values, can be applied to the liquid crystal assembly by the control unit; and **in that** the auto-correlation function can be set in dependence on the voltage applied to the liquid crystal assembly.

11. A light barrier in accordance with any one of the preceding claims, **characterized in that**
at least two transmitter units (4, 5, 6), in particular transmitter units arranged next to one another, are each provided with an encoding apparatus (18, 19, 24);
**in that** at least two receiver units (7, 8, 9) corresponding to the transmitter units (4, 5, 6) are provided, in particular that one corresponding receiver unit (7, 8, 9) is provided with respect to each transmitter unit (4, 5, 6);
**in that** a diffractive optical element (20, 21) having substantially maximum transmissibility for the encoded light (12', 13'transmitted by the transmitter unit (4, 5, 6) is provided in the respective beam path between a transmitter unit (4, 5, 6) and the corresponding receiver unit (7, 8, 9); and
**in that** the auto-correlation functions of at least two adjacent diffractive optical elements (20, 21) differ such that the transmissibility of the diffractive optical elements (20, 21) is in each case substantially lower for the encoded light (13', 12') of the adjacent channel than for the encoded light (12', 13') associated with the respective diffractive optical element (20, 21), in particular
**in that** the diffractive optical elements (20, 21) are respectively substantially impermeable for the encoded light (13', 12') of the adjacent channel.

12. A light barrier in accordance with any one of the preceding claims, **characterized in that** the encoding apparatus and the deflection unit, in particular the reflector, are made as one piece; and/or **in that** an evaluation circuit is provided which transmits an object detection signal when the amount of the received light falls below a defined threshold at least at one receiver unit.

13. A light grid consisting of a plurality of light barriers in accordance with any one of the preceding claims.

## Revendications

1. Barrière lumineuse, notamment barrière lumineuse à réflexion, comprenant une unité d'émission (4, 5, 6, 29) pour émettre un signal lumineux (11, 12, 13, 31) en direction d'une unité de renvoi (15, 16, 17, 26, 27), et une unité de réception (7, 8, 9, 30) pour recevoir la lumière (12', 12'', 13', 31'''') renvoyée par l'unité de renvoi (15, 16, 17, 26, 27), une zone de surveillance (14, 32) étant aménagée sur la trajectoire du faisceau lumineux entre l'unité d'émission (4, 5, 6, 29) et l'unité de réception (7, 8, 9, 30), **caractérisée en ce qu**'un dispositif de codage (18, 19, 24, 33) est prévu, permettant d'imprimer sur la lumière émise (11, 12, 13, 31) une information d'image prédéterminée, en ce qu'un dispositif de décodage est disposé sur la trajectoire du faisceau lumineux, notamment à proximité de l'unité de réception (7, 8, 9, 30), dispositif qui réalise pour l'essentiel la fonction d'auto-corrélation correspondant à l'information d'image imprimée sur la lumière émise (11, 12, 13, 31), et en ce que le dispositif de décodage est configuré sous la forme d'un élément optique diffractif (20, 21, 23, 34).

2. Barrière lumineuse selon la revendication 1, **caractérisée en ce que** le faisceau lumineux (12', 13', 31'''') portant l'information d'image et l'élément optique diffractif (20, 21, 23, 34) sont orientés l'un par rapport à l'autre de telle manière que l'élément optique diffractif (20, 21, 23, 34) pour le faisceau lumineux (12', 13', 31'''') portant l'information d'image possède pour l'essentiel sa perméabilité maximale, c'est-à-dire que la pointe de corrélation générée par l'élément optique diffractif (20, 21, 23, 34) est pour l'essentiel imprimée complètement sur l'unité de réception (7, 8, 9, 30), notamment **en ce que** le faisceau lumineux (12', 13', 31'''') portant l'information d'image est pour l'essentiel aligné sur l'axe optique de l'élément optique diffractif (20, 21, 23, 34).

3. Barrière lumineuse selon la revendication 1 ou 2, **caractérisée en ce que** le dispositif de codage (18, 19, 24, 33) est configuré sous la forme d'un élément optique diffractif ou holographique disposé sur la trajectoire du faisceau lumineux, et/ou **en ce que** le dispositif de codage (18, 19, 24, 33) est configuré sous la forme d'un diaphragme disposé sur la trajectoire du faisceau lumineux, notamment d'un masque d'ombre, par exemple un masque perforé ou rayé.

4. Barrière lumineuse selon l'une des revendications précédentes, **caractérisée en ce que** l'unité d'émission comprend un élément d'émission émettant une lumière laser ainsi qu'un dispositif d'excitation constituant le dispositif de codage, permettant d'exciter l'élément d'émission pour émettre une lumière avec l'information d'image imprimée prédéterminée.

5. Barrière lumineuse selon l'une des revendications précédentes, **caractérisé en ce que** sur la trajectoire du faisceau lumineux, entre l'élément optique diffractif et l'unité de renvoi, un dispositif de reproduction, notamment une lentille, est prévu pour la reproduction notamment focalisée du signal de sortie généré par l'élément optique diffractif sur l'unité de réception, et/ou **en ce que** sur la trajectoire du faisceau lumineux, en amont de l'élément optique diffractif (20, 21, 23, 34) constituant le dispositif de décodage, un dispositif de reproduction, notamment une lentille (37, 38, 39), est prévu, par lequel l'information d'image imprimée sur la lumière et reproduite, notamment de façon focalisée, sur l'élément optique diffractif (20, 21, 23, 34).

6. Barrière lumineuse selon l'une des revendications précédentes, **caractérisée en ce que** l'unité de renvoi est configurée sous la forme d'un réflecteur (15, 16, 17), et/ou **en ce que** l'unité de renvoi est configurée sous la forme d'un élément miroir (26, 27).

7. Barrière lumineuse selon l'une des revendications précédentes, **caractérisée en ce que** sur la trajectoire du faisceau lumineux plusieurs unités de renvoi (26, 27) sont prévues, et/ou **en ce que** le dispositif de codage (18, 19, 24) est disposé à l'extrémité de la zone de surveillance (14).

8. Barrière lumineuse selon l'une des revendications précédentes, **caractérisée en ce que** le dispositif de codage (18, 19, 24) est disposé à proximité de l'unité de renvoi (15, 16, 17), du côté faisant face à la zone de surveillance (14), et/ou **en ce que** l'unité d'émission (4, 5, 6) et l'unité de réception (7, 8, 9) sont configurées sous la forme d'un système autocollimateur.

9. Barrière lumineuse selon l'une des revendications précédentes, **caractérisée en ce que** l'unité de renvoi (15, 16, 17) est disposée face à l'unité d'émission (4, 5, 6) et à l'unité de réception (7, 8, 9) à l'extrémité de la zone de surveillance (14), et/ou **en ce que** l'élément optique diffractif (20, 21, 23, 24) est disposé pour l'essentiel à l'intérieur du niveau de Fourier.

10. Barrière lumineuse selon l'une des revendications précédentes, **caractérisée en ce qu**'une unité de commande est prévue, permettant de régler la fonction d'auto-corrélation réalisée par l'élément optique diffractif, notamment en ce que l'élément optique diffractif est configuré sous la forme d'un ensemble à cristaux liquides, en ce que l'unité de commande permet de fournir différents signaux de commande, notamment différentes valeurs de tension, à l'ensemble à cristaux liquides, et en ce que la fonction d'auto-corrélation peut être réglée en fonction de la tension présente sur l'ensemble à cristaux liquides.

11. Barrière lumineuse selon l'une des revendications précédentes, **caractérisée en ce qu**'au moins deux unités d'émission (4, 5, 6) présentant respectivement un dispositif de codage (18, 19, 24) sont disposées notamment l'une à côté de l'autre, en ce qu'au moins deux unités de réception (7, 8, 9) correspondant aux unités d'émission (4, 5, 6) sont prévues, notamment une unité de réception (7, 8, 9) correspondant à chacune des unités d'émission (4, 5, 6), en ce que respectivement sur la trajectoire du faisceau lumineux entre une unité d'émission (4, 5, 6) et l'unité de réception (7, 8, 9) correspondante un élément optique diffractif (20, 21) pour l'essentiel à perméabilité maximale est prévu pour la lumière codée émise par l'unité d'émission (4, 5, 6), et en ce que les fonctions d'auto-corrélation d'au moins deux éléments optiques diffractifs (20, 21) voisins se distinguent l'un de l'autre de telle manière que la perméabilité des éléments optiques diffractifs (20, 21) est nettement plus faible respectivement à la lumière codée (13', 12') du canal voisin qu'à la lumière codée (12', 13') associée à l'élément optique diffractif (20, 21) respectif, notamment en ce que les éléments optiques diffractifs (20, 21) sont respectivement pour l'essentiel imperméables à la lumière codée (13', 12') du canal voisin.

12. Barrière lumineuse selon l'une des revendications précédentes, **caractérisée en ce que** le dispositif de codage et l'unité de renvoi, notamment le réflecteur, sont réalisés en une seule pièce, et/ou **en ce qu'**un circuit d'analyse est prévu, qui émet un signal de détection d'objet lorsque la quantité de lumière reçue, au moins au niveau d'une unité de réception, n'atteint pas une valeur seuil déterminée.

13. Grille lumineuse comprenant une pluralité de barrières lumineuses selon l'une des revendications précédentes.
